# EUROPEAN PATENT APPLICATION

(11) **EP 4 759 849 A1**
(43) Date of publication of application: **17.06.2026**
(21) Application number: 24307090.1
(22) Date of filing: 12.12.2024
(51) Int. Cl.: C08G 18/08, C08G 18/12, C08G 18/48, C08G 18/66, C08G 18/75, C09D 175/00, B32B 33/00

(54) **WATER BASED POLYURETHANE DISPERSION FOR SOFT TOUCH MATTE COATING**

(71) Applicant: ARKEMA FRANCE, 92800 Puteaux (FR)
(72) Inventor: ZHU, Peiwang, Dublin, 43017 (US); ZAMORA, Ray, Dublin, 43017 (US); RENSCHLER, Alexandra, Dublin, 43017 (US); STEED, Jared, Dublin, 43017 (US); PUTHANPARAMBIL, Deepa, Dublin, 43017 (US); JOHNSON, Randy, Dublin, 43017 (US)
(74) Representative: Bandpay & Greuter

(57) **Abstract**

A water based polyurethane dispersion is included herein. The dispersion includes a polymer, the polymer comprising the reaction product of (i). a prepolymer, preferably an isocyanate terminated polyurethane prepolymer, and (ii) an amine compound and/or inorganic base compound in an aqueous based medium. The prepolymer comprises the reaction product of (i) an isocyanate compound having a functionality of at least about 1.8, preferably the isocyanate compound comprises a non-aromatic isocyanate or an aromatic isocyanate; and (ii) a plurality of polyols. The plurality of polyols includes at least a 1^{st} polyol having a hydroxyl functionality of more than about 2.5, and a 2^{nd} polyol having at least one of a carboxylic acid moiety, a phosphoric acid moiety, or a sulfonic acid moiety or any combination thereof. Also enclosed are methods of making the dispersion, applications for the dispersion, and methods of making the applications of the dispersion.

## Description

### FIELD OF THE INVENTION

The field of the invention is a water based polyurethane dispersion, methods of making the water based polyurethane dispersion, applications of the water based polyurethane dispersion, matte resins comprising the water based polyurethane dispersion, methods of making the matte resin, matte substrates comprising a matte coating including the water based polyurethane dispersion and methods of making the matte substrate.

### BACKGROUND

Traditionally a matte coating was achieved by using inorganic matting agent such as silica particles dispersed in a polymer binder resin. The dispersion usually settles over time and the coating doesn't have a soft-touch feeling. Recently polymeric dispersions have been developed to provide the soft-touch feeling as well as better shelf life such as in WO 2016/102596 A. In the WO 2016/102596 A application, a polyurethane - styrene/acrylic hybrid structure was produced in a 2-step reaction where a polyurethane prepolymer was made by reacting polyols and isocyanates and is then dispersed into an acrylic and styrene/water emulsion. In a 2^{nd} step the acrylic and styrene were polymerized through a radical polymerization. The process is very complicated. Moreover, there remains unreacted styrene and acrylic monomer residuals in 2^{nd} step, which eventually evaporate into the environment or migrate into a package formed using the dispersion. In this same application, hydrazine is used as a chain extender. Hydrazine is a toxic chemical, which possesses health hazard to operators and the residual unreacted hydrazine also possesses health hazard to end users. A matte substrate including the polymeric dispersion and the styrene/acrylic binder has a gloss value (against white/dry background at 60°) of typically around 7-8. While it performs adequately in many applications, lower gloss is desired as it allows the opportunity to add a binding resin to improve the scuff resistance. Further water based polyurethane dispersions of the prior art have shelf stability issues.

### BRIEF DESCRIPTION

One embodiment included herein is a water based polyurethane dispersion ("PUD"). The PUD may comprise a polymer, the polymer comprising the reaction product of (i) a prepolymer, preferably an isocyanate terminated polyurethane prepolymer, and (ii) an amine compound or an inorganic base compound in an aqueous medium. The prepolymer comprises the reaction product of (a) an isocyanate compound having a functionality of at least about 1.8, preferably less than 3.0, more preferably no more than about 2.5, further preferably no more than about 2.1; also it is preferred that the isocyanate compound comprises a non-aromatic isocyanate or an aromatic isocyanate, preferably the non-aromatic isocyanate comprises an aliphatic isocyanate, further preferably the non-aromatic isocyanate comprises a cycloaliphatic isocyanate; and (b) a plurality of polyols including (1) a 1^{st} polyol of the plurality of polyols having a hydroxyl functionality of more than about 2.5, preferably at least about 2.75, more preferably at least about 3.0, further preferably at least about 4, (2) a 2^{nd} polyol of the plurality of polyols having at least one of a carboxylic acid moiety, a phosphoric acid moiety, or a sulfonic acid moiety or any combination thereof, and (3) optionally a 3^{rd} polyol, wherein the 3^{rd} polyol comprises a polyether polyol, preferably the 3^{rd} polyol comprising a diol, preferably having a number average molecular weight of at least about 1000 Daltons, more preferably of at least about 1500 Daltons, further preferably not more than about 5000 Daltons.

The PUD may be used to form a matte substrate. The matte substrate may have a variety of applications and may be laminated to other materials to make articles. In embodiments, the matte substrate can be used as an over laminate applied to book covers, magazine covers, folder covers and the like.

Embodiments disclosed herein may have one or more of the following benefits: (1) increased shelf stability, (2) lower 60° gloss, (3) reduced manufacturing cost, (4) non-use of hazardous substances, (5) improved scuff-resistance, (6) self-healing; (7) having a soft, preferably velvety, touch, (8) enhanced rub resistance, and (9) any combination thereof.

### DETAILED DESCRIPTION

Before explaining at least one embodiment of the inventive concept(s) in detail by way of exemplary drawings, experimentation, results, and laboratory procedures, it is to be understood that the inventive concept(s) is not limited in its application to the details of construction and the arrangement of the components set forth in the following description or illustrated in the drawings, experimentation and/or results. The inventive concept(s) is/are capable of other embodiments or of being practiced or carried out in various ways. As such, the language used herein is intended to be given the broadest possible scope and meaning; and the embodiments are meant to be exemplary - not exhaustive. Also, it is to be understood that the phraseology and terminology employed herein is for the purpose of description and should not be regarded as limiting.

Unless otherwise defined herein, scientific and technical terms used in connection with the present disclosure shall have the meanings that are commonly understood by those of ordinary skill in the art. Further, unless otherwise required by context, singular terms shall include pluralities and plural terms shall include the singular. Generally, nomenclatures utilized in connection with, and techniques of chemistry described herein are those well-known and commonly used in the art. Reactions and purification techniques are performed according to manufacturer's specifications or as commonly accomplished in the art or as described herein.

All patents, published patent applications, and non-patent publications mentioned in the specification are indicative of the level of skill of those skilled in the art to which this present disclosure pertains. All patents, published patent applications, and non-patent publications referenced in any portion of this application are herein expressly incorporated by reference in their entirety to the same extent as if each individual patent or publication was specifically and individually indicated to be incorporated by reference.

All of the compositions and/or methods disclosed and claimed herein can be made and executed without undue experimentation in light of the present disclosure. While the compositions and methods of this invention have been described in terms of preferred embodiments, it will be apparent to those of skill in the art that variations may be applied to the compositions and/or methods and in the steps or in the sequence of steps of the methods described herein without departing from the concept, spirit and scope of the invention. All such similar substitutes and modifications apparent to those skilled in the art are deemed to be within the spirit, scope and concept of the inventive concept(s) as defined by the appended claims.

As utilized in accordance with the present disclosure, the following terms, unless otherwise indicated, shall be understood to have the following meanings:
The use of the word "a" or "an" when used in conjunction with the term "comprising" in the claims and/or the specification may mean "one," but it is also consistent with the meaning of "one or more," "at least one," and "one or more than one." The use of the term "or" in the claims is used to mean "and/or" unless explicitly indicated to refer to alternatives only or the alternatives are mutually exclusive, although the disclosure supports a definition that refers to only alternatives and "and/or." Throughout this application, the term "about" is used to indicate that a value includes the inherent variation of error for the device, the method being employed to determine the value, and/or the variation that exists among the study subjects. The use of the term "at least one" will be understood to include one as well as any quantity more than one, including, but not limited to, 2, 3, 4, 5, 10, 15, 20, 30, 40, 50, 100, etc. The term "at least one" may extend up to 100 or 1000 or more, depending on the term to which it is attached; in addition, the quantities of 100/1000 are not to be considered limiting, as higher limits may also produce satisfactory results. In addition, the use of the term "at least one of X, Y and(/or) Z" will be understood to include X alone, Y alone, and Z alone, as well as any combination of X, Y and Z.

As used in this specification and claim(s), the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The term "or combinations thereof" as used herein refers to all permutations and combinations of the listed items preceding the term. Forexample, "A, B, C, or combinations thereof" is intended to include at least one of: A, B, C, AB, AC, BC, or ABC, and if order is important in a particular context, also BA, CA, CB, CBA, BCA, ACB, BAC, or CAB. Continuing with this example, expressly included are combinations that contain repeats of one or more items or terms, such as BB, AAA, MB, BBC, AAABCCCC, CBBAAA, CABABB, and so forth. The skilled artisan will understand that typically there is no limit on the number of items or terms in any combination, unless otherwise apparent from the context.

The term "monomer" refers to a small molecule that chemically bonds during polymerization to one or more monomers of the same or different kind to form a polymer.

The term "polymer" refers to a large molecule comprising one or more types of monomer residues (repeating units) connected by covalent chemical bonds. By this definition, polymer encompasses compounds wherein the number of monomer units may range from very few, which more commonly may be called as oligomers, to very many.

Reference herein to the wt% of the composition, the final composition is meant to be inclusive of the entire composition unless stated otherwise. All parts and percentages set forth in this specification and the claims are on a weight-by-weight basis (wet) unless noted otherwise.

WT% (on a) Dry Basis is the wt% based on components other than water.

Unless otherwise stated, standards mentioned throughout the present application are those in effect on the date the application is filed. Samples of methods that may be used to determine properties are listed below. However, the methods may be equally applicable, and the claims are not limited to the method below unless stated in the claim.

Methods that may be used to determine number average molecular weight include but are not limited to Gel Permeation Chromatography (GPC), Vapor Phase Osmometry, Membrane Osmometry and Lowering of Vapor Pressure.

NCO% (AKA %NCO): One technique to determine the NCO% is ASTM D5155. Determining the NCO% is not necessarily limited to the aforementioned technique. Unless stated otherwise NCO% is the wt% of the free NCO in the prepolymer.

Viscosity: Unless otherwise stated, the viscosity was measured using a Brookfield viscometer with a number 3 or 4 spindle at 20 rpm at room temperature (20-25°C). An alternate apparatus to measure viscosity is a TA Instruments Discovery HR-1 rheometer with a cone- plate. The cone-plate may have a diameter of 40 mm. A typical measuring temperature is 23°C and a typical shear rate is 0.79 1/s.

Hydroxyl Number: The OH number may be determined by ASTM D4274 Standard Test Methods for Testing Polyurethane Raw Materials: Determination of Hydroxyl Numbers of Polyols. How to determine the OH number is not limited to the aforementioned ASTM standard. Types of titration methods may also be suitable.

By way of example unless otherwise stated, the meaning of "about X", it is intended to mean "more or less 10% the value of X".

In the context of the invention, the ranges of values are understood to be inclusive. For example, the range "between 0% and 25%" includes, in particular, the values 0% and 25%.

The water based composition of the present disclosure is typically selected from the group consisting of a polyurethane dispersion, an acrylic dispersion, a blend of polyurethane dispersion and acrylic dispersion, and is preferably a polyurethane dispersion. In one embodiment, the polyurethane dispersion may be a water based aliphatic urethane dispersion.

The water based polyurethane dispersion disclosed herein includes a polymer, the polymer comprising (or being) the reaction product of a prepolymer and an amine compound or an inorganic base compound in an aqueous medium. Preferably the prepolymer comprises, or is, an isocyanate terminated polyurethane prepolymer. It is also preferred that the amine compound comprises, or is, an aliphatic or cyclical amine compound, it is more preferred the amine compound is a tertiary amine. In the case of the inorganic base compound, suitable examples include sodium hydroxide, potassium hydroxide, lithium hydroxide and combinations thereof. The prepolymer may comprise, or be, the reaction product of an isocyanate compound having a functionality of at least about 1.8, preferably less than 3.0, more preferably no more than about 2.5, further preferably no more than about 2.1 (such as a functionality of from about 1.8 to less than 3.0, preferably from about 1.8 to about 2.5, more preferably from about 1.8 to about 2.1), preferably the isocyanate compound comprises, or is, a non-aromatic isocyanate or an aromatic isocyanate, preferably the non-aromatic isocyanate comprises, or is, an aliphatic isocyanate, further preferably the non-aromatic isocyanate comprises, or is, a cycloaliphatic isocyanate; and a plurality of polyols, a 1^{st} polyol of the plurality of polyols having a hydroxyl functionality of more than about 2.5, preferably at least about 2.75, more preferably at least about 3.0, further preferably at least about 4.0 and a 2^{nd} polyol of the plurality of polyols having at least one of a carboxylic acid moiety, a phosphoric acid moiety, or a sulfonic acid moiety or any combination thereof, the plurality of polyols optionally comprising a 3^{rd} polyol, wherein the 3^{rd} polyol comprises, or is, a polyether polyol, preferably the 3^{rd} polyol comprising, or being, a diol, preferably having a number average molecular weight of at least about 1000 Daltons, more preferably of at least about 1500 Daltons, further preferably not more than about 5000 Daltons.

Exemplary isocyanate compounds which can be used in the present disclosure include isocyanate compounds comprising more than 1 isocyanate group, preferably more than 1.5 isocyanate groups, e.g., at least about 1.8, more preferably 2 or more isocyanate groups. The isocyanate compounds can be monomeric, or polymeric isocyanate including aromatic and aliphatic, in particular cycloaliphatic, polyisocyanates, more preferred are the aliphatic isocyanate compounds, such as the aliphatic monomeric isocyanates or the aliphatic polymeric isocyanates.

The isocyanate compounds used in the present disclosure can be diisocyanates that include cycloaliphatic, aromatic and aliphatic-aromatic diisocyanates. Specific examples of the cycloaliphatic diisocyanates can include, but are not limited to, cyclopentane-1,3-diisocyanate, cyclohexane-1,4-diisocyanate, cyclohexane-1,2-diisocyanate, 1-isocyanato-2-isocyanatomethyl cyclopentane, 1-isocyanato-3-isocyanato-methyl-3,5,5-trimethylcyclohexane (isophorone diisocyanate or IPDI), bis-(4-isocyanatocyclohexyl)-methane or 2,4'-dicyclohexylmethane diisocyanate, 1,3- or 1,4-bis-(isocyanatomethyl)-cyclohexane, bis-(4-isocyanato-3-methylcyclohexyl)-methane, α',α',α',α'-tetramethyl-1,3- and/or -1,4-xylylene diisocyanate, 1-isocyanato-1-methyl-4(3)-isocyanatomethyl cyclohexane, 2,4- or 2,6-hexahydrotoluylene diisocyanate, and the like.

Specific examples of the aromatic and aliphatic-aromatic diisocyanates can include, but are not limited to, 2,4- or 2,6-toluene diisocyanate, 4,4'-diphenylmethane diisocyanate, 2,2-diphenylpropane-4,4'-diisocyanate, xylylene diisocyanate, 1,4-naphthylene diisocyanate, 1,5-naphthylene diisocyanate, m-phenylene diisocyanate, p-phenylene diisocyanate, diphenyl-4,4'-diisocyanate, azobenzene-4,4'-diisocyanate, diphenylsulphone-4,4'-diisocyanate, 2,4-tolylene diisocyanate, 1-chlorobenzene-2,4-diisocyanate, and modified aromatic diisocyanates containing carbodiimide groups, urethane groups, allophanate groups, isocyanurate groups, urea groups or biuret.

The modified aromatic diisocyanate can be modified MDI (modified methylene bisphenyl diisocyanate).

The modified aromatic diisocyanate can be uretonimine modified isocyanate, which can be derived from 2,4- or 2,6-tolylene diisocyanate; or derived from 4,4'- or 2,4'-diphenylmethane diisocyanate such as uretonimine modified 4,4'-diphenylmethane diisocyanate. Suitable uretonimine modified isocyanates can include Rubinate^{®} 1680, commercially available from Huntsman Corporation; and ISONATE^{™} 143L Modified MDI, commercially available from The Dow Chemicals Company.

Another example of the modified MDI (modified methylene bisphenyl diisocyanate) may be a diphenylmethane diisocyanate in which at least about 2% of isocyanate groups have been modified to carbodiimide, or allophanate, or biuret, or polymeric structure.

In a further example, modified MDI may include a mixture of isomers of MDI, some of which have been modified to carbodiimide, or allophanate, or biuret, or polymeric structure, and some of which have not been modified, therefore, remain as monomers e.g., 4,4'-MDI, 2,4'-MDI, 2,2'-MDI, or combinations thereof.

In one non-limiting embodiment, the isocyanate compound can be hexamethylene diisocyanate, toluene diisocyanate (TDI), isophorone diisocyanate (IPDI), methylene bisphenyl diisocyanate (MDI), hydrogenated MDI (HMDI) and/or poly-MDI (with functionality greater than 2).

If so desired, optionally, the polyurethane composition (i.e. the polyurethane dispersion) may be free of an aromatic isocyanate compound. For example, the polyurethane composition may be free of an aromatic isocyanate compound selected from the group consisting of diphenylmethane diisocyanate (MDI), toluene diisocyanate (TDI), naphthalene diisocyanate, diisocyanato benzene, bis(isocyanato methyl)benzene, and combinations thereof.

Preferred functionalities of the isocyanate compounds (such as the polymeric and/or monomeric isocyanates) are at least about 2 up to less than about 3, preferably less than 2.8 (for example, from about 2 to less than 2.8). Particular of preferred examples of functionality may comprise at least about 2.1, up to about 2.7, at least about 2.15, at least about 2.2, at least about 2.25, at least about 2.3 and at least about 2.35 (such as from about 2.1 to about 2.7, or from about 2.15 to about 2.7, or from about 2.2 to about 2.7, or from about 2.25 to about 2.7, or from about 2.3 to about 2.7, or from about 2.35 to about 2.7). Alternatively, the functionality may be about 1.8 to about 1.9, 1.9 to about 2.0, 2.0 to about 2.1, about 2.1 to about 2.2, about 2.2 to about 2.3, about 2.3 to about 2.4, about 2.4 to about 2.5, about 2.5 to about 2.6, about 2.6 to about 2.7, about 2.7 to about 2.8, about 2.8 to about 2.9, about 2.9 to less than about 3.0 and combinations thereof.

The 1^{st} polyol has a hydroxyl functionality of greater than 2.0, preferably more than about 2.5, more preferably at least about 2.7, further preferably at least about 3.0, most preferably at least about 4.0. Therefore, preferred 1^{st} polyols include triols and polyols having a higher functionality such as 4, 5 or more (e.g., tetrol or hexitol). A non-exhaustive list of suitable compounds may include trimethylolpropane, glycerol, pentaerythritol, sorbitol, mannitol and combinations thereof. The amount of the 1^{st} polyol, or of 1^{st} polyol residue, in the water based polyurethane dispersion, is preferably less than about 5 wt%, more preferably less than about 3 wt%, even more preferably less than about 2 wt%, further preferably no more than about 1 wt %, more particularly less than about 1 wt%, based on the weight of the water based polyurethane dispersion. Preferably, said amount is more than about 0.25 wt% based on the weight of the water based polyurethane dispersion. The amount of 1^{st} polyol, or of 1^{st} polyol residue, may in particular be from more than about 0.25 wt% to less than about 5 wt%, preferably from more than about 0.25 wt% to less than about 3 wt%, more preferably from more than about 0.25 wt% to less than about 2 wt%, even more preferably from more than about 0.25 wt% to about 1 wt%, such as from more than about 0.25 wt% to less than about 1 wt%, based on the weight of the water based polyurethane dispersion.

Preferred 2^{nd} polyols are those polyols with carboxylic, phosphoric and/or sulfuric acid functionality. Examples of such polyols include dimethylol propionic acid, dimethylol butanoic acid and their combinations. The amount of the 2^{nd} polyol, or of 2^{nd} polyol residue, in the water based polyurethane dispersion, is preferably less than about 5 wt%, more preferably less than about 3 wt%, even more preferably less than about 2 wt%, further preferably less than about 1 wt%, based on the weight of the water based polyurethane dispersion. Said amount is preferably more than about 0.25 wt% based on the weight of the water based polyurethane dispersion. The amount of 2^{nd} polyol, or of 2^{nd} polyol residue, may in particular be from more than about 0.25 wt% to less than about 5 wt%, preferably from more than about 0.25 wt% to less than about 3 wt%, more preferably from more than about 0.25 wt% to less than about 2 wt%, even more preferably from more than about 0.25 wt% to less than about 1 wt%, based on the weight of the water based polyurethane dispersion.

The plurality of polyols used to form the prepolymer advantageously comprises at least a 3^{rd} polyol which comprises, or is, a polyether polyol. Preferably the 3^{rd} polyol comprises, or is, a polyether diol. The 3^{rd} polyol preferably has a number average molecular weight of at least about 1000 Daltons, more preferably of at least about 1500 Daltons, further preferably not more than about 5000 Daltons. In particular, the 3^{rd} polyol may have a number average molecular weight of from about 1000 to about 5000 Daltons, preferably from about 1500 to about 5000 Daltons; for example the 3^{rd} polyol may have a number average molecular weight of from 1000 to 1500 Daltons, or from 1500 to 2000 Daltons, or from 2000 to 2500 Daltons, or from 2500 to 3000 Daltons, or from 3000 to 4000 Daltons, or from 4000 to 5000 Daltons.

The prepolymer that comprises, or is, the reaction product of the isocyanate compound and the plurality of polyols preferably has an NCO% of less than about 5%, preferably less than about 4%. Preferably, the NCO% of the prepolymer is at least about 1%, more preferably at least about 2%, further preferably more than about 3%. In particular, the prepolymer may have a NCO% of from about 1% to less than about 5%, preferably from about 2% to less than about 5%, more preferably from about 2% to less than about 4%, even more preferably from more than about 3% to less than about 4%. In some embodiments, the NCO% of the prepolymer comprises, or is, at least one of about 1% to about 2%, about 2% to about 3%, about 3% to about 4%, about 4% to less than about 5% or combinations thereof. The NCO% is preferably determined according to ASTM D5155.

Preferably the prepolymer comprises, or is, a crosslinked prepolymer.

The prepolymer may have a melting point of more than about 0°C, preferably more than about 10°C, more preferably more than about 20°C, further preferably more than about 30°C, even more preferably more than about 40°C. The prepolymer may have a glass-transition temperature Tg of no more than about 0°C, preferably no more than about -15°C, more preferably no more than about -30°C, further preferably no more than about -45°C, even more preferably no more than about -60°C.

Preferably, the prepolymer which is reacted to prepare the polymer is in the form of a plurality of particles. Preferably, the melting point of at least one of the particles comprises, or is, more than about 0°C, preferably more than about 10°C, more preferably more than about 20°C, further preferably more than about 30°C, even more preferably more than about 40°C. Preferably, at least one of the particles has a Tg of no more than about 0°C, preferably no more than about - 15°C, more preferably no more than about -30°C, further preferably no more than about -45°C, even more preferably no more than about -60°C.

The melting point of the prepolymer/particles may be measured according to ISO 11357-3 Plastics - Differential scanning calorimetry (DSC) Part 3. The Tg of the prepolymer/particles may be measured using Differential Scanning Calorimetry (DSC) according to ASTM D7426.

One or more amine compounds and/or one or more inorganic base compounds may be added to form the polymer, typically in amounts of about 0.25% to about 5% by weight of the water based polyurethane dispersion, preferably about 0.5% to about 4% by weight of the water based polyurethane dispersion. The amine compound is preferably a tertiary amine. Examples of the tertiary amines which may be used include trimethylamine, triethylamine, benzyldimethylamine, pyridine, imidazole and any combination thereof. Examples of inorganic bases which may be used include sodium hydroxide, potassium hydroxide, lithium hydroxide and any combination thereof.

By "aqueous medium" is meant any medium comprising water. The aqueous medium may further comprise at least one of a wetting agent, a defoamer, a rheology modifier, a thickener, an antifoaming agent, flocculants, slip additives, a wax additive, an optical brightener, a flow promoter, a mineral filler, a biocide and combinations thereof.

The reaction for forming the polymer may involve at least one chain extender, in addition to the prepolymer and the amine compound and/or the inorganic base compound. The polymer thus comprises, or is, a chain extended polymer (the chain extended polymer being the reaction product of the prepolymer, the amine compound and/or inorganic base compound and the chain extenders). Chain extenders increase the molecular weight of the polymer and block length. Typically chain extenders improve properties like tensile strength and elongation of the polymer. Preferably, the chain extenders used in the present disclosure are hydrazine-free chain extenders. Preferably, the chain extenders are sulfonate-free chain extenders. More preferably, the chain extenders are hydrazine-free and sulfonate-free chain extenders. Advantageously, the chain extenders used in the present disclosure comprise, or are, at least one polyfunctional amine compound, preferably at least one diamine compound. Preferably, the chain extenders have amine groups selected from primary amine groups, secondary amine groups and combination thereof, preferably from primary amine groups; more preferably the chain extenders comprise, or are, primary diamines (i.e. diamines with two primary amine groups). Suitable chain extenders which may be used include ethylene diamine, propylene diamine and the combinations thereof.

The water based polyurethane dispersion preferably comprises less than about 0.5 wt%, more preferably less than about 0.1 wt%, of hydrazine and/or hydrazine residue, based on the weight of the water based polyurethane dispersion. Most preferably the water based polyurethane dispersion is devoid of hydrazine and/or of hydrazine residue.

The water based polyurethane dispersion preferably comprises less than about 0.5 wt%, more preferably less than about 0.1 wt%, of a sulfonate chain extender and/or sulfonate chain extender residue, based on the weight of the water based polyurethane dispersion. Most preferably the water based polyurethane dispersion is devoid of sulfonate chain extender and/or sulfonate chain extender residue.

The water based polyurethane dispersion is preferably substantially devoid, more preferably devoid, of a free radical polymerized vinyl monomer. Preferably, the water based polyurethane dispersion is substantially devoid, preferably devoid, of free radical polymerized acrylic groups.

The water based polyurethane dispersion is preferably substantially free of, more preferably is free of, a free radical initiator. Preferably, the water based polyurethane dispersion is substantially free of, preferably free of, inorganic peroxides and organic peroxides.

Preferably, the water based polyurethane dispersion comprises less than about 5 wt%, preferably less than about 4 wt%, more preferably less than about 3 wt%, further preferably less than about 2 wt%, even more preferably less than about 1 wt%, of a vinyl monomer, based on the weight of the water based polyurethane dispersion. Most preferably, the water based polyurethane dispersion is devoid of vinyl monomer.

Advantageously, the water based polyurethane dispersion has a shelf stability of at least about 30 days, preferably at least about 60 days, more preferably at least about 90 days. The shelf stability is preferably determined as described below, by measuring the water separation.

The water based polyurethane dispersion may optionally include at least one binder resin.

The disclosure also relates to a resin, preferably a matte resin, comprising a water based polyurethane dispersion and a binding resin. The water based polyurethane dispersion may be as described herein.

In the present disclosure, the term "matte" for characterizing in particular a resin, a coating or a substrate, preferably means that the gloss of an un-laminated film (corresponding to a film prepared from said resin, to said coating or to said substrate) at 60 degree is less than 20, preferably less than 10, more preferably less than 5. Gloss is preferably measured using a glossmeter at 60 degrees, for example using a BYK Gardner Micro gloss meter at 60 degrees in accordance with manufacturers' instructions.

Examples of the binder resin may include acrylic emulsions such as Hydriprint 335 from Hydrite Chemical Co, NeoCryl BT-100 from Covestro, Induprint PAC 243, Induprint PAC 266 from Indulor; styrene acrylic emulsions such as Induprint SE 2194 from Indulor, Encor 8440 from Arkema; polyesters, preferably water based polyesters, such as Vitel 6220, Vitel 6270 from Bostik; polyvinyl alcohols such as Vinnapas EP 7000 from Wacker; and polyurethanes, preferably water based polyurethanes, such as Purethane 1078 from Bostik. Additionally or alternatively the binder resin may include, or may be, a wax, preferably at least one of polyethylene wax, polypropylene wax and combinations thereof, more preferably a polyethylene wax, even more preferably a modified polyethylene wax (e.g., Aquacer 8025 wax or 8330 wax or Joncryl wax 28 from BASF). The afore-mentioned list is not an exhaustive list of potential binder resins.

Preferably, the resin of the present disclosure, preferably the matte resin, comprises the binding resin in an amount of at least about 5 wt%, preferably at least about 10 wt%, more preferably no more than about 25 wt%, further preferably no more than about 20 wt%, on a dry basis. In particular, the resin, preferably the matte resin, may comprise the binding resin in an amount of from about 5 wt% to about 25 wt%, preferably from about 10 wt% to about 25 wt%, more preferably from about 10 wt% to about 20 wt%, on a dry basis. In some embodiments, the resin, preferably the matte resin, comprises an amount, on a dry basis, of binding resin of about 5 wt% to about 10 wt%, or about 10 wt% to about 15 wt%, or about 15 wt% to about 20 wt%, or about 20 wt% to about 25 wt% or combinations thereof.

The disclosure also relates to a substrate, preferably a matte substrate, comprising a film formed from a water based polyurethane dispersion as described above or a resin, preferably a matte resin, as described above and a base substrate. The film formed from the water based polyurethane dispersion or the resin is advantageously a dried film.

The base substrate used in the invention may be any type of substrate material generally used for coated substrates. For example, the base substrate is typically selected from the group consisting of polyamide, polyester, polypropylene, polyethylene, polyvinyl chloride (PVC), styrene, foil, paper, paperboard and combinations thereof. The base substrate may have a thickness of about 0.02 mil to about 25 mil, although other thicknesses are within the scope of the invention. Typically, the base substrate will have a surface energy greater than about 38 dynes/cm², although base substrates with lower surface energy may be used. Examples of base substrates that may be used include CAPRAN^{®} polyamide available from Honeywell, Morris Township, N.J., U.S.A., LUMIRROR polyester available from Toray Plastics (America) Inc., Fort Royal, Va., U.S.A., MYLAR^{®} and MELINEX^{®} polyester available from DuPONT TEIJIN FILMS^{™}, Hopewell, Va., U.S.A., BICOR^{®} and SYNCARTA^{®} polypropylene available from ExxonMobil Chemical, Baytown, Tex., U.S.A. and GRX and AQS polypropylene available from AET Films, New Castle, Del., U.S.A.

In some embodiments, the base substrate may comprise, or be, a laminate, preferably the laminate comprises at least one of a PET layer, a PE (polyethylene) layer, a PP (polypropylene) layer, and combinations thereof, preferably the laminate comprises a PET layer.

The base substrate preferably comprises, or is, a flexible base substrate, in particular a flexible packaging film. Flexible packaging is any package or part of a package whose shape can readily be changed when filled or during use.

The base substrate (without the film) preferably has a 60° gloss of at least about 80, preferably at least about 100. The 60° gloss may be measured according to ASTM D523, preferably by using a micro-Tri-gloss meter, for example a micro-Tri-gloss meter from BYK Gardener Gmbh.

The base substrates are generally planar materials having first and second sides, usually with relatively little thickness. The water based coating composition (which comprises, or is, the water based polyurethane dispersion or the resin, in particular the matte resin) is applied to one or more sides of the base substrate, typically one side of the base substrate, to form a coating on the base substrate, preferably a matte coating. The coating may remain on one side of the base substrate and dry to create a matte substrate having a first side with a matte finish attributable to the water based coating composition and a second side that is not matte but has the characteristics of the base substrate. Optionally, the water based coating composition (also called herein "water based coating material") may be applied to both sides of the base substrate.

Preferably, in the substrate, preferably the matte substrate, disclosed herein, the base substrate has at least one white surface and the film is disposed on the white surface or on at least one of the white surfaces.

In an embodiment, the matte substrate comprises the water based polyurethane dispersion, preferably the matte resin, and a base substrate.

Preferably, the substrate disclosed herein, preferably the matte substrate, exhibits a 60° gloss of less than about 10, preferably less than about 7.5, more preferably less than about 6.5, further preferably no more than about 6.0, even more preferably no more than about 5.5. When the base substrate of the substrate (preferably the matte substrate) includes, or is, a laminate, preferably a laminate as described above, the substrate (preferably the matte substrate) preferably exhibits 60° gloss of no more than about 5.5, more preferably no more than about 5.0, further preferably no more than about 4.5, even more preferably no more than about 4.0, even further preferably no more than about 3.5, and most preferably no more than about 3.0. The 60° gloss can be determined as described above.

In the substrate of the present disclosure, preferably the matte substrate, the film may advantageously have a self-healing surface.

In the substrate of the present disclosure, preferably the matte substrate, the film advantageously has a soft touch. The substrate, preferably the matte substrate, may in particular mimic velvet.

The water based polyurethane dispersion may be applied to the base substrate using typical graphic arts application methods such as gravure, flexo, rod, slot die and the like. For example, the water based coating composition, such as the polyurethane dispersion, cross-linking agent, optional binder resin and other materials, may be applied to the base substrate using these methods to form the substrate, preferably the matte substrate. Application rates (i.e. coating weights) are generally less than or equal to about 3 dry pounds of water based coating composition per about 3,000 square feet of base substrate, preferably less than or equal to about 2.40 dry pounds of water based coating composition per about 3,000 square feet of base substrate and typically less than or equal to about 2.25 dry pounds of water based coating composition per about 3,000 square feet of base substrate. The application rates (i.e. coating weights) may be from about 1 to about 3 dry pounds of water based coating composition per about 3,000 square feet of base substrate, preferably about 1 to about 2.4 dry pounds of water based coating composition per about 3,000 square feet of base substrate and typically from about 1 to about 2.25 dry pounds of water based coating composition per about 3,000 square feet of base substrate, including about 1 dry pound to about 2 dry pounds of water based coating composition per about 3,000 square feet of base substrate. In a particular embodiment the application rate (i.e. coating weight) may be about 2 dry pounds of water base coating composition per about 3,000 about square feet of base substrate.

Optionally in certain embodiments, depending on the nature of the base substrate, an adhesion promoting layer (formed from an adhesion promoting material also called herein "adhesion promoter") may be used to enhance adhesion of the water based coating composition. Accordingly, the method of applying the water based coating composition to the base substrate may include applying an adhesion promoting material as a layer to the base substrate prior to applying the water based coating composition. The adhesion promoter may be selected from polyethylenimine (POLYMIN^{®} P available from BASF), polyurethane dispersion (NEOREZ^{®} R600 available from DSM), cationic acrylics (Ottopol KX-99 available from Gellner Industrial LLC, Hometown, Pa., USA) and copolymer dispersions (MICHEM^{®} PRIME 4983 and MICHEM^{®} PRIME 4990 available from MICHELMAN^{®}, Cincinnati, Ohio, U.S.A.), and the like and combinations thereof. Typical dry coating weights of the adhesion promoter are from about 0.1 to about 1.5 dry pounds per 3,000 square feet of base substrate, including from about 0.5 to about 1.2 dry pounds per 3,000 square feet of the base substrate, with the water based coating composition then applied over the optional adhesion promoter layer preferably at the coating weights discussed herein. In embodiments wherein an adhesion promoting material is applied, such material is applied to the first and/or second side(s) of the base substrate prior to the application of the water based coating material.

Another optional step may include subjecting the base substrate to a corona treatment prior to applying the water based coating material to the base substrate. Preferably, the water based coating material is applied to the surface of the base substrate that has been subjected to the corona treatment. The aforementioned corona treatment may be used instead of applying the above mentioned adhesion promoter.

The substates of the present disclosure, preferably the matte substrates, may be laminated to another material (i.e. a second material) in a post laminating operation. For example, the substate (preferably the matte substrate) may have a thermal heat sealing layer applied to one side of the base substrate typically to the side of the base substrate opposite to that which was coated, particularly in embodiments where the water based coating composition coats only one side of the base substrate. The substate (preferably the matte substrate) may also have an adhesive, such as a pressure sensitive adhesive or wet bond adhesive, applied to one or both sides of the substate (preferably the matte substrate), typically a side which does not comprise the coating from the water based coating composition.

The substates of the present disclosure (preferably the matte substrates) may be used as over laminate on over laminated substrates, such as metal, wood, paperboard, paper and plastic substrates and the like, and may be over laminates applied to other printed substrates, for example, over laminates applied to book covers, magazine covers, folder covers and the like. Typically, the substates of the present disclosure (preferably the matte substrates) are writable with a writing instrument, such as a pencil, or ball point pen.

Coatings and other materials may be applied onto the coated surface such that the substate (preferably the matte substrate) comprising the water based coating composition may further comprise an overcoat, such as a water based overcoat (which may be different or the same as the water based dispersion in the water based coating composition), a solvent, energy curable materials and the like and combinations thereof. For example, UV curable gloss topcoats can be applied to the coated surface and such topcoats have excellent flow, wetting, and adhesion to the water based coating material.

Further, the substates of the present disclosure (preferably the matte substrates) have excellent flexibility and will lay flat with no curl, i.e. will not curl the base substrate, which provides exemplary properties to the coated substrate (preferably the matte substrate). The substrate (preferably the matte substrate) typically has soft touch feel. The soft touch feel for coatings, preferably matte coatings, disclosed herein may be determined by touching the dried (matte) coating applied to the substrate. The soft touch is subjectively evaluated with the dried (matte) coating on the substrate having a soft feel.

All parts and percentages set forth in this specification and the claims are on a weight-by-weight basis (wet) unless noted otherwise.

One method to determine the shelf stability is measuring the water separation over time. In this method, the water based polyurethane dispersion with or without binder resin is stored in a see through closed container, such as but not limited to a container with a graduated scale indicating the amount of the dispersion present in the container. The container is allowed to sit for a set number of days such as but not limited to any one of 30 days, 45 days, 60 days, 90 days, etc. After the set number of days, the contents of the container are viewed to determine the amount of phase separation. Phase separation is determined by visual inspection. Phase separation occurs by observing a top layer of water formed on the dispersion.

Upon the inspection, if the water layer has a predetermined thickness, e.g., 1", a remix step is performed. To perform the remix step, agitation is applied to the contents until the contents visually have at least a reasonably substantially uniform appearance. If after 48 hours after the remix step the contents of the container still have the reasonably substantially uniform appearance the dispersion is exhibiting sufficient shelf stability. The dispersion is not exhibiting shelf stability once remixing the dispersion does not result in the reasonably substantially uniform appearance.

The present disclosure also relates to a method of making a water based polyurethane dispersion as described above, comprising reacting a prepolymer as described above and an amine compound and/or inorganic base compound as described above, in an aqueous medium. In particular, the prepolymer preferably comprises the reaction product of an isocyanate compound as described above and a plurality of polyols as described above. The prepolymer and the amine compound and/or inorganic base compound may further react with at least one chain extender, preferably as described above.

The aqueous medium may further comprise at least one of a non-hydrazine chain extender, preferably at least one polyfunctional amine, a wetting agent, a defoamer, a rheology modifier, a thickener, a biocide, flocculants, slip additives, a wax additive, an optical brightener, a flow promoter, a mineral filler and combinations thereof.

The method preferably further comprises reacting the isocyanate compound and the plurality of polyols thereby forming the prepolymer, and preferably heating the prepolymer until the prepolymer has a NCO% of less than about 5%, preferably less than about 4%. Preferably the heated prepolymer has a NCO% of at least about 1%, even more preferably at least about 2%, further preferably more than about 3%. More particularly, the prepolymer is preferably heated until the prepolymer has a NCO% of from about 1% to less than about 5%, preferably from about 2% to less than about 4%, more preferably from more than about 3% to less than about 4%; or alternatively until the NCO% of the prepolymer comprises, or is, at least one of about 1% to about 2%, about 2% to about 3%, about 3% to about 4%, about 4% to less than about 5% or combinations thereof. Preferably the NCO% is determined by ASTM D5155.

Advantageously, the reaction of the isocyanate compound with the plurality of polyol is carried out in the presence of a catalyst. Examples of catalysts that can be used are dibutyltin dilaurate, dioctyltin dilaurate, dioctyltin carboxylate, bismuth catalysts such as Borchi Kat 24, stannous octonate, tertiary amines and combinations thereof.

The present disclosure also relates to a method of making a resin, preferably a matte resin, as described above. Said method comprises, preferably consists essentially of, more preferably consists of, making a water based polyurethane dispersion according to a method as described above and adding a binder resin, preferably as described above, to the water based polyurethane dispersion. The resin, preferably the matte resin, preferably comprises up to about 25 wt% of the binder resin. The binder resin advantageously comprises, or is, at least one of an acrylic emulsion, a styrene acrylic emulsion, a polyester, preferably a water based polyester, a polyvinyl alcohol, a polyurethane, preferably a water based polyurethane, a wax, preferably a polyethylene wax, and combinations thereof.

### ASPECTS

The disclosed subject matter also includes the following aspects (which can be combined with any embodiments disclosed above).

A first aspect is a water based polyurethane dispersion ("PUD"). The PUD comprises a polymer, the polymer comprising, or being, the reaction product of (i) a prepolymer, preferably an isocyanate terminated polyurethane prepolymer, and (ii) an amine compound and/or an inorganic base compound in an aqueous medium, preferably the amine compound comprises an aliphatic or cyclical amine, more preferably the amine compound comprises, or is, a tertiary amine. The prepolymer comprises, or is, the reaction product of (a) an isocyanate compound having a functionality of at least about 1.8, preferably less than 3.0, more preferably no more than about 2.5, further preferably no more than about 2.1 (such as a functionality of from about 1.8 to less than 3.0, preferably from about 1.8 to about 2.5, more preferably from about 1.8 to about 2.1), preferably the isocyanate compound comprises, or is, a non-aromatic isocyanate or an aromatic isocyanate, preferably a non-aromatic isocyanate, preferably the non-aromatic isocyanate comprises, or is, an aliphatic isocyanate, further preferably the non-aromatic isocyanate comprises, or is, a cycloaliphatic isocyanate; and (b) a plurality of polyols; (1) a 1^{st} polyol of the plurality of polyols having a hydroxyl functionality of more than about 2.5, preferably at least about 2.75, more preferably at least about 3.0, further preferably at least about 4.0 and (2) a 2^{nd} polyol of the plurality of polyols having at least one of a carboxylic acid moiety, a phosphoric acid moiety, or a sulfonic acid moiety or any combination thereof, preferably the prepolymer comprises, or is, a crosslinked prepolymer.

A second aspect of the water based polyurethane dispersion of aspect 1 wherein the plurality of polyols further comprises a 3^{rd} polyol, wherein the 3^{rd} polyol comprises, or is, a polyether polyol, preferably the 3^{rd} polyol comprising, or being, a diol, preferably having a number average molecular weight of at least about 1000 Daltons, more preferably of at least about 1500 Daltons, further preferably not more than about 5000 Daltons (such as from about 1000 to about 5000 Daltons, preferably from about 1500 to about 5000 Daltons).

A third aspect of the water based polyurethane dispersion of either of aspects 1 or 2 wherein the polymer comprises, or is, a chain extended polymer wherein the reaction of the prepolymer and the amine further comprises a hydrazine- and sulfonate-free chain extender, preferably the chain extender comprises, or is, at least one polyfunctional amine compound, more preferably at least one diamine compound, even more preferably at least one primary diamine compound, other than hydrazine, preferably the chain extender comprises, or is selected from, at least one of ethylene diamine, propylene diamine and combinations thereof.

A fourth aspect of the water based polyurethane dispersion of any one of the preceding aspects wherein the prepolymer having an NCO% of less than about 5%, preferably less than about 4%, more preferably at least about 1%, even more preferably at least about 2%, further preferably more than about 3% (such as from about 1% to less than about 5%, preferably from about 2% to less than about 4%, more preferably from more than about 3% to less than about 4%); or alternatively the NCO% of the prepolymer comprises, or is, at least one of about 1% to about 2%, about 2% to about 3%, about 3% to about 4%, about 4% to less than about 5% or combinations thereof, preferably the NCO% is determined by ASTM D5155.

A fifth aspect of the water based polyurethane dispersion of any one of the preceding aspects having a shelf stability of at least about 30 days, preferably at least about 60 days, more preferably at least about 90 days; wherein the shelf stability is preferably determined as described herein.

A sixth aspect is a resin, preferably a matte resin, comprising the water based polyurethane dispersion of any one of the preceding aspects and a binding resin, preferably the binding resin comprises, or is, at least one of an acrylic emulsion, a styrene-acrylic emulsion, polyester, preferably a water based polymer polyester, a polyurethane, preferably a water based polyurethane, a polyvinyl alcohol, a wax, preferably a polyethylene wax, and combinations thereof.

A seventh aspect includes the resin, preferably the matte resin, of aspect 6 having a binding resin in an amount of at least about 5 wt% on a dry basis, preferably at least about 10 wt%, more preferably no more than about 25 wt%, further preferably no more than about 20 wt% (such as from about 5 wt% to about 25 wt%, preferably from about 10 wt% to about 20 wt%, on a dry basis); or alternatively the resin, preferably the matte resin, comprises an amount (on a dry basis) of binding resin of about 5 wt% to about 10 wt%, about 10 wt% to about 15 wt%, about 15 wt% to about 20 wt%, about 20 wt% to about 25 wt% or combinations thereof.

An eighth aspect includes a substrate, preferably a matte substrate. The substrate, preferably the matte substrate, includes a film, preferably a dried film, formed from either the water based polyurethane dispersion or the resin (preferably the matte resin) of any one of the preceding aspects and a base substrate preferably having a thickness of about 0.02 mil to about 25 mil and preferably selected from the group consisting of polyamide, polyester, polypropylene, polyethylene, polyvinyl chloride, styrene, foil, paper, paperboard and combinations thereof, more preferably the base substrate without the film (preferably the dried film) having a 60° gloss of at least about 80, preferably at least about 100, further preferably the base substrate comprises, or is, a flexible base substrate.

A ninth aspect includes the substrate, preferably the matte substrate, of aspect 8 wherein the base substrate having a white surface and the film (preferably the dried film) disposed on the white surface, the matte substrate exhibits a 60° gloss of less than about 10, preferably less than about 7.5, more preferably less than about 6.5, further preferably no more than about 6.0, even more preferably no more than about 5.5; or alternatively, the base substrate comprises, or is, a laminate, preferably the laminate comprises at least one of PET layer, PE (polyethylene) layer, PP (polypropylene) layer, and combinations thereof, preferably the laminate comprises PET layer, preferably the substrate (preferably the matte substrate) comprising the laminate exhibits 60° gloss of no more than about 5.5, more preferably no more than about 5.0, further preferably no more than about 4.5, even more preferably no more than about 4.0, even further preferably no more than about 3.5, and most preferably no more than about 3.0.

A tenth aspect includes the substrate, preferably the matte substrate, of either one of aspects 8 or 9 wherein the film having a self-healing surface.

An eleventh aspect includes the substrate, preferably the matte substrate, of any of aspects 8, 9 or 10 wherein the film having a soft touch, wherein the substrate, preferably the matte substrate, preferably mimics velvet.

A twelfth aspect includes a method of making an water based polyurethane dispersion comprising reacting a prepolymer, preferably an isocyanate terminated polyurethane prepolymer, and an amine compound and/or an inorganic base compound in an aqueous medium, preferably the prepolymer comprises the reaction product of (a) an isocyanate compound having a functionality of at least about 1.8, preferably less than 3.0, more preferably no more than about 2.5, further preferably no more than about 2.1 (such as a functionality of from about 1.8 to less than 3.0, preferably from about 1.8 to about 2.5, more preferably from about 1.8 to about 2.1), preferably the isocyanate compound comprises, or is, a non-aromatic isocyanate or an aromatic isocyanate, preferably a non-aromatic isocyanate, preferably the non-aromatic isocyanate comprises, or is, an aliphatic isocyanate, further preferably the non-aromatic isocyanate comprises, or is, a cycloaliphatic isocyanate; and (b) a plurality of polyols, (i) a 1^{st} polyol the plurality of polyols having a hydroxyl functionality of more than about 2.5, preferably at least about 2.75, more preferably at least about 3.0, further preferably at least about 4.0 and (ii) a 2^{nd} polyol of the plurality of polyols having at least one of a carboxylic acid moiety, a phosphoric acid moiety, or a sulfonic acid moiety or any combination thereof, and (iii) the plurality of polyols optionally comprises a 3^{rd} polyol, wherein the 3^{rd} polyol comprises, or is, a polyether polyol, preferably the 3^{rd} polyol comprising, or being, a diol, preferably having a number average molecular weight of at least about 1000 Daltons, more preferably of at least about 1500 Daltons, further preferably not more than about 5000 Daltons (such as from about 1000 to about 5000 Daltons, preferably from about 1500 to about 5000 Daltons), preferably the prepolymer comprises, or is, a crosslinked prepolymer.

A thirteenth aspect includes the method of aspect 12 further comprising reacting the isocyanate compound and the plurality of polyols thereby forming the prepolymer, and heating the prepolymer until the prepolymer has a NCO% of less than about 5%, preferably less than about 4%, more preferably at least about 1%, even more preferably at least about 2%, further preferably more than about 3% (such as from about 1% to less than about 5%, preferably from about 2% to less than about 4%, more preferably from more than about 3% to less than about 4%); or alternatively until the NCO% of the prepolymer comprises at least one of about 1% to about 2%, about 2% to about 3%, about 3% to about 4%, about 4% to less than about 5% or combinations thereof; preferably the NCO% is determined by ASTM D5155.

A fourteenth aspect includes the method of either one of aspects 12 or 13 wherein the aqueous medium further comprises at least one of a non-hydrazine chain extender, preferably at least one polyfunctional amine, a wetting agent, a defoamer, a rheology modifier, thickener, biocide, flocculants, slip additives, wax additive, optical brightener, flow promoter, mineral filler, and combinations thereof.

A fifteenth aspect includes a method of making a resin, preferably a matte resin, comprising, preferably consisting essentially of, more preferably consisting of, the method of anyone of aspects 12, 13 or 14 and adding a binder resin to the water based polyurethane dispersion, wherein the resin (preferably the matte resin) preferably comprises up to about 25 wt% of the binder resin, optionally the binder resin comprises, or is, at least one of acrylic emulsion, styrene acrylic emulsion, a water based polyester, polyvinyl alcohol, a water based polyurethane, wax, preferably a polyethylene wax, and combinations thereof. Examples of the acrylic resins include Hydriprint 335 from Hydrite Chemical Co, NeoCryl BT-100 from Covestro, Induprint PAC 243, Induprint PAC 266 from Indulor; examples of styrene acrylic emulsions include Induprint SE 2194 from Indulor, Encor 8440 from Arkema; examples of water base polyesters include Vitel 6220, Vitel 6270 from Bostik; Examples of polyvinyl alcohols include Vinnapas EP 7000 from Wacker; Examples of polyurethanes include Purethane 1078 from Bostik.

A sixteenth aspect includes the water based polyurethane dispersion of any one of the preceding aspects substantially devoid of a free radical polymerized vinyl monomer, preferably devoid of free radical polymerized acrylic groups.

A seventeenth aspect includes the water based polyurethane dispersion of any one of the preceding aspects 1-5 substantially free of a free radical initiator, preferably free of inorganic peroxides and organic peroxides.

An eighteenth aspect includes the water based polyurethane dispersion of any one of the preceding aspects 1-5 or 17 comprising less than about 5 wt% of a vinyl monomer, preferably less than about 4 wt%, more preferably less than about 3 wt%, further preferably less than about 2 wt%, even more preferably less than about 1 wt%, even furthermore preferably being devoid of the vinyl monomer.

A nineteenth aspect is the water based polyurethane dispersion of any one of the preceding aspects 1-5 or 17-18 further comprising less than about 0.5 wt% of hydrazine, preferably less than about 0.1 wt%, more preferably being devoid of the hydrazine.

A twentieth aspect is the water based polyurethane dispersion of any one of the preceding aspects 1-5 or 17-19 further comprising less than about 0.5 wt% of a sulfonate chain extender, preferably less than about 0.1 wt%, more preferably being devoid of the sulfonate chain extender.

A twenty-first aspect is the water based polyurethane dispersion of any one of the preceding aspects 1-5 or 17-20 wherein the prepolymer is in a form of a plurality of particles, wherein a melting point of at least one of the particles comprises, or is, more than about 0°C, preferably more than about 10°C, more preferably more than about 20°C, further preferably more than about 30°C, even more preferably more than about 40°C. The melting point may be measured according to ISO 11357-3 Plastics - Differential scanning calorimetry (DSC) Part 3.

A twenty-second aspect has the water based polyurethane dispersion of aspect twenty-one wherein at least one of the particles has a Tg of no more than about 0°C, preferably no more than about -15°C, more preferably no more than about -30°C, further preferably no more than about -45°C, even more preferably no more than about -60°C. The Tg (glass transition temperature) may be measured using Differential Scanning Calorimetry (DSC) according to ASTM D7426.

A twenty-third aspect includes the water based polyurethane dispersion of any one of the preceding aspects 1-5 or 17-22 wherein based on the weight of the water based polyurethane dispersion an amount of the 2^{nd} polyol comprises less than about 5 wt%, preferably less than about 3 wt%, more preferably less than about 2 wt%, further preferably less than about 1 wt%, even more preferably more than about 0.25 wt% (such as from more than about 0.25 wt% to less than about 5 wt%, preferably from more than about 0.25 wt% to less than about 3 wt%, more preferably from more than about 0.25 wt% to less than about 2 wt%, even more preferably from more than about 0.25 wt% to less than about 1 wt%).

A twenty-fourth aspect of the water based polyurethane dispersion of any one of the preceding aspects 1-5 or 17-23 wherein based on the weight of the water based polyurethane dispersion an amount of the 1^{st} polyol comprises less than about 5 wt%, preferably less than about 3 wt%, more preferably less than about 2 wt%, further preferably less than about 1 wt%, even more preferably more than about 0.25 wt% (such as from more than about 0.25 wt% to less than about 5 wt%, preferably from more than about 0.25 wt% to less than about 3 wt%, more preferably from more than about 0.25 wt% to less than about 2 wt%, even more preferably from more than about 0.25 wt% to less than about 1 wt%).

A twenty-fifth aspect of the water based polyurethane dispersion of any one of the preceding aspects 1-5 or 17-24 wherein the aqueous medium further comprises at least one of a wetting agent, a defoamer, a rheology modifier, a thickener, antifoaming agent, flocculants, slip additives, wax additive, optical brightener, flow promoter, mineral filler, a biocide and combinations thereof.

The compositions and their applications according to the present disclosure may be prepared and used according to the example(s) set out below. These examples are presented herein for purposes of illustration of the present disclosure and are not intended to be limiting, for example, the preparations of the compositions and their applications.

### EXAMPLES

Raw materials and methods.

PolyTHF 2000: Poly(tetramethylene ether) glycol, molecular weight 2000 g/mol (or 2000 Daltons), from BASF.
DMPA: Dimethylolpropanoic acid, from Sigma-Aldrich
TMP: Trimethylolpropane from OQ Chemicals Gmbh, having a hydroxyl functionality of 3.
IPDI: Isophorone diisocyanate from Covestro LLC (having a functionality of 2.0)
DBTL: Dibutyltin dilaurate from Sigma-Aldrich
Aquaflow XLS 530: Associative thickener from Ashland Specialty Ingredients G.P.
TEA: Triethylamine from Sigma-Aldrich
EDA: Ethylenediamine from Dow Chemicals
PDA: 1,2-Propylene diamine from Univar Solutions
Mergal CM 1.5: A biocide from Troy Chem Corp
BYK 024: A defoamer from BYK USA Inc.

Gloss measurement: The dispersions were applied on a piece of optical clear PET substrate (50 µm) with a Mayer rod (#3). Typical coat weight was about 1.0 -1.5 g/m². The coatings were dried at 80°C for 5 minutes. The coated PET substrates were placed against the white background of a Leneta N2C-2 card. The gloss was then measured at 60° using a micro-Tri-gloss meter from BYK Gardener Gmbh.

The NCO% was determined in accordance with ASTM D5155

### Control Example: No First Polyol in the Prepolymer, Gloss (60°) was 9.2

A 2 liter reactor equipped with a thermometer, stirrer, condenser and nitrogen inlet was charged with PolyTHF 2000 (716.34 g), DMPA (19.26 g) under N₂ atmosphere. The mixture was heated at 65°C for 30 minutes. IPDI (193.92 g) was then charged and the temperature of the mixture was gradually increased to 70°C in 20 minutes. A catalyst of DBTL (0.48 g) was added to accelerate the reaction. Temperature of the mixture was allowed to rise and maintained between 80-90°C. The NCO% was monitored. As soon as the NCO% reached 3.5% or less, in about 2 hours, the mixture was dispersed while being agitated at a speed of 700 rpm into an aqueous mixture containing water (1823.10 g), Aquaflow XLS 530 (129.00 g), TEA (12.00 g) and BYK 024 (6.00 g). After mixing for 1 hour, an EDA (18.30 g)/PDA (5.10 g)/water (72.00 g) solution was drop added to the dispersion in about 30 minutes. Mergal CM 1.5 (1.50 g) was then added. The dispersion was mixed overnight (~ 18 hours). A uniform PUD dispersion was obtained. It was coated onto a PET substrate. The gloss (60°) of the coating was measured at 9.2.

### Example: with a First Polyol in the Prepolymer, Gloss (60°) was 5.6

A 2 liter reactor equipped with a thermometer, stirrer, condenser and nitrogen inlet was charged with PolyTHF 2000 (560.04 g), DMPA (17.30 g), and TMP (27.00 g) under N₂ atmosphere. The mixture was heated at 65°C for 30 minutes. IPDI (232.30 g) was then charged and the temperature of the mixture gradually increased to 70°C in 20 minutes. A catalyst of DBTL (0.44 g) was added to accelerate the reaction. Temperature of the mixture was allowed to rise and maintained between 80 - 90°C. The NCO% was monitored. As soon as the NCO% reached 3.5% or less, in about 2 hrs, the mixture was dispersed while being agitated at a speed of 700 rpm into an aqueous mixture containing water (1674.62 g), Aquaflow XLS 530 (86.50 g), TEA (16.05 g) and BYK 024 (5.33 g). After mixing for 1 hour, an EDA (16.55 g)/PDA (4.70 g)/water (54.00 g) solution was drop added to the dispersion in about 30 minutes. Mergal CM 1.5 (1.35 g) was then added. The dispersion was mixed overnight (~ 20 hrs). A uniform PUD dispersion was obtained. It was coated on a piece of PET substrate. The gloss (60°) of the coating was measured at 5.6.

## Claims

1. A water based polyurethane dispersion comprising
a. A polymer, the polymer comprising the reaction product of
i. a prepolymer, preferably an isocyanate terminated polyurethane prepolymer, and
ii. an amine compound and/or an inorganic base compound in an aqueous medium, preferably the amine compound comprises an aliphatic or cyclical amine compound or preferably the inorganic base compound selected from the group of sodium hydroxide, potassium hydroxide, lithium hydroxide and combinations thereof, wherein
b. the prepolymer comprises the reaction product of
i. an isocyanate compound having a functionality of at least about 1.8, preferably less than 3.0, more preferably no more than about 2.5, further preferably no more than about 2.1, preferably the isocyanate compound comprises a non-aromatic isocyanate or an aromatic isocyanate, preferably the non-aromatic isocyanate comprises an aliphatic isocyanate, further preferably the non-aromatic isocyanate comprises a cycloaliphatic isocyanate; and
ii. A plurality of polyols,
1. a 1^{st} polyol of the plurality of polyols having a hydroxyl functionality of more than about 2.5, preferably at least about 2.75, more preferably at least about 3.0, further preferably at least about 4.0 and
2. a 2^{nd} polyol of the plurality of polyols having at least one of a carboxylic acid moiety, a phosphoric acid moiety, or a sulfonic acid moiety or any combination thereof.

2. The water based polyurethane dispersion of claim 1 wherein the plurality of polyols further comprises a 3^{rd} polyol, wherein the 3^{rd} polyol comprises a polyether polyol, preferably the 3^{rd} polyol comprising a diol, preferably having a number average molecular weight of at least about 1000 Daltons, more preferably of at least about 1500 Daltons, further preferably not more than about 5000 Daltons.

3. The water based polyurethane dispersion of either of claims 1 or 2 wherein the polymer comprises a chain extended polymer wherein the reaction of the prepolymer and the amine compound and/or inorganic base compound further comprises a hydrazine- and sulfonate-free chain extender, preferably the chain extender comprises at least one diamine compound other than hydrazine, preferably the chain extender comprises at least one of ethylene diamine, propylene diamine and combinations thereof.

4. The water based polyurethane dispersion of any one of the preceding claims wherein the prepolymer has an NCO% of less than about 5%, preferably less than about 4%, more preferably at least about 1%, even more preferably at least about 2%, further preferably more than about 3%; or alternatively the NCO% of the prepolymer comprises at least one of about 1% to about 2%, about 2% to about 3%, about 3% to about 4%, about 4% to less than about 5% or combinations thereof, preferably the NCO% determined by ASTM D5155.

5. The water based polyurethane dispersion of any one of the preceding claims having a shelf stability of at least about 30 days, preferably at least about 60 days, more preferably at least about 90 days; preferably the shelf stability determined as described herein.

6. A matte resin comprising the water based polyurethane dispersion of any one of the preceding claims and a binding resin, preferably the binding resin comprises at least one of an acrylic emulsion, a styrene-acrylic emulsion, a polyurethane, preferably a water based polyurethane, a wax, preferably a polyethylene wax, a polyester, preferably a water based polyester, a polyvinyl alcohol, and combinations thereof.

7. The matte resin of claim 6 having a binding resin in an amount of at least about 5 wt% on a dry basis, preferably at least about 10 wt%, more preferably no more than about 25 wt%, further preferably no more than about 20 wt%; or alternatively the matte resin comprise an amount of binding resin of about 5 wt% to about 10 wt%, about 10 wt% to about 15 wt%, about 15 wt% to about 20 wt%, about 20 wt% to about 25 wt% or combinations thereof.

8. Matte substrate comprising
a. A dried film formed from either the water based polyurethane dispersion or the matte resin of any one of the preceding claims and
b. a base substrate preferably having a thickness of about 0.02 mil to about 25 mil and preferably selected from the group consisting of polyamide, polyester, polypropylene, polyethylene, polyvinyl chloride, styrene, foil, paper, paperboard and combinations thereof, more preferably the base substrate without the dried film has a 60° gloss of at least about 80, preferably at least about 100, further preferably the base substrate comprises a flexible base substrate.

9. The matte substrate of claim 8 wherein the base substrate has a white surface and the dried film disposed on the white surface, the matte substrate exhibits a 60° gloss of less than about 10, preferably less than about 7.5, more preferably less than about 6.5, further preferably no more than about 6.0, even more preferably no more than about 5.5; or alternatively, the base substrate comprises a laminate, preferably the laminate comprises PET layer, preferably the matte substrate comprising the laminate exhibits 60° gloss of no more than about 5.5, more preferably no more than about 5.0, further preferably no more than about 4.5, even more preferably no more than about 4.0, even further preferably no more than about 3.5, and most preferably no more than about 3.0.

10. The matte substrate of either one of claims 8 or 9 wherein the film has a soft touch, preferably mimics velvet.

11. A method of making a water based polyurethane dispersion comprising reacting a prepolymer, preferably an isocyanate terminated polyurethane prepolymer, and an amine compound and/or an inorganic base compound in an aqueous medium, preferably the prepolymer comprises the reaction product of
a. an isocyanate compound having a functionality of at least about 1.8, preferably less than 3.0, more preferably no more than about 2.5, further preferably no more than about 2.1, preferably the isocyanate compound comprises a non-aromatic isocyanate or an aromatic isocyanate, non-aromatic, preferably the non-aromatic isocyanate comprises an aliphatic isocyanate, further preferably the non-aromatic isocyanate comprises a cycloaliphatic isocyanate; and
b. A plurality of polyols,
i. a 1^{st} polyol of the plurality of polyols having a hydroxyl functionality of more than about 2.5, preferably at least about 2.75, more preferably at least about 3.0, further preferably at least about 4 and
ii. a 2^{nd} polyol of the plurality of polyols having at least one of a carboxylic acid moiety, a phosphoric acid moiety, or a sulfonic acid moiety or any combination thereof,
iii. the plurality of polyols optionally comprises a 3^{rd} polyol, wherein the 3^{rd} polyol comprises a polyether polyol, preferably the 3^{rd} polyol comprising a diol, preferably having a number average molecular weight of at least about 1000 Daltons, more preferably of at least about 1500 Daltons, further preferably not more than about 5000 Daltons.

12. The method of claim 11 further comprising reacting the isocyanate compound and the plurality of polyols thereby forming the prepolymer, and heating the prepolymer until the prepolymer has a NCO% of less than about 5%, preferably less than about 4%, more preferably at least about 1%, even more preferably at least about 2%, further preferably more than about 3%; or alternatively until the NCO% of the prepolymer comprises at least one of about 1% to about 2%, about 2% to about 3%, about 3% to about 4%, about 4% to less than about 5% or combinations thereof; preferably the NCO% determined by ASTM D5155.

13. The method of either one of claims 11 or 12 wherein the aqueous medium further comprises at least one of a non-hydrazine chain extender, preferably at least one polyfunctional amine, a wetting agent, a defoamer, a rheology modifier, a thickener, a biocide and combinations thereof.

14. The method of making a matte resin consisting essentially of, preferably consisting of, the method of any one of claims 11 to 13 and adding a binder resin to the water based polyurethane dispersion, wherein preferably the matte resin comprises up to about 25 wt% of the binder resin, optionally the binder resin comprises a wax, preferably a polyethylene wax, and/or a crosslinker.
